Europäisches Patentamt

European Patent Office

Office européen des brevets

(19)

(11) Veröffentlichungsnummer: **0 194 621**
**B1**

(12) **EUROPÄISCHE PATENTSCHRIFT**

(45) Veröffentlichungstag der Patentschrift:
03.08.88

(51) Int. Cl.⁴: **D 21 H 3/78**

(21) Anmeldenummer: **86103110.2**

(22) Anmeldetag: **08.03.86**

(54) **Verwendung von Copolymerisaten auf Basis von Alkyl(meth)acrylaten als Dispergiermittel für Pigmente bei der Herstellung von Papier.**

(30) Priorität: **12.03.85 DE 3508704**

(43) Veröffentlichungstag der Anmeldung:
**17.09.86 Patentblatt 86/38**

(45) Bekanntmachung des Hinweises auf die Patenterteilung:
**03.08.88 Patentblatt 88/31**

(84) Benannte Vertragsstaaten:
**AT BE CH DE FR GB IT LI NL SE**

(56) Entgegenhaltungen:
**US - A - 3 840 487**
**US - A - 3 873 417**
**US - A - 3 945 843**

(73) Patentinhaber: **BASF Aktiengesellschaft,
Carl-Bosch-Strasse 38, D-6700 Ludwigshafen (DE)**

(72) Erfinder: **Hirsch, Guenter, Dr., Ostpreussenstrasse 9,
D-6704 Mutterstadt (DE)**
Erfinder: **Auhorn, Werner, Albrecht-Duerer-Ring 34 e,
D-6710 Frankenthal (DE)**

## Beschreibung

Konzentrierte wässrige Pigmentanschlämmungen werden in der Technik in grossem Umfang zur Herstellung von Papierstreichmassen benötigt. Um hochkonzentrierte wässrige Pigmentanschlämmungen herzustellen, dispergiert man feingemahlene Pigmente in Wasser in Gegenwart von 0,1 bis 2 Gew.-%, bezogen auf Pigmente, eines Dispergiermittels. Niedrigmolekulare Polymerisate der Acrylsäure, die beispielsweise nach dem Verfahren der EP-PS 2 771 hergestellt werden, sind besonders wirksame Dispergiermittel. Zur Herstellung hochkonzentrierter wässriger Pigmentanschlämmungen verwendet man ausserdem gemäss der Lehre der DE-OS 3 123 732 Copolymerisate aus Acrylsäure und einer Acrylamidopropansulfonsäure. Aus der US-PS 3 840 487 ist ausserdem bekannt, dass Copolymerisate, die 40 bis 95 Mol.% einer ethylenisch ungesättigten Carbonsäure, wie Acrylsäure oder Methacrylsäure, und 5 bis 60 Mol.% eines Esters einer ethylenisch ungesättigten Carbonsäure, z.B. Methylacrylat, einpolymerisiert enthalten, Dispergiermittel für Pigmente sind. Die so hergestellten Pigmentanschlämmungen enthalten die Pigmente in feinverteiltem Zustand, haben eine gegenüber dispergiermittelfreien Anschlämmungen niedrigere Viskosität und werden ausschliesslich zur Herstellung von Papierstreichmassen verwendet. Die Papierstreichmassen enthalten ausser den dispergiermittelhaltigen hochkonzentrierten wässrigen Pigmentanschlämmungen als weiteren wesentlichen Bestandteil noch ein Bindemittel für Pigmente. Die Papierstreichmassen werden ausschliesslich zum Beschichten von Papier eingesetzt.

Aus der US-A-3 945 843 ist bekannt, dass Copolymerisate aus Methylacrylat und Acrylsäure als Dispergiermittel zur Herstellung von hochkonzentrierten Pigmentanschlämmungen, wie Calciumcarbonat-Slurries, geeignet sind. Die Pigmentanschlämmungen, die einen Feststoffgehalt von 50 bis 80 Gew.-% haben, werden zum Beschichten von Papier verwendet.

Wässrige Pigmentanschlämmungen, die unter Verwendung der üblichen polymeren Dispergiermittel hergestellt worden sind, eignen sich jedoch nicht für die Herstellung füllstoffhaltiger Papiere, bei der man dem Papierstoff solche wässrigen Pigmentanschlämmungen zusetzt und aus dem so behandelten Stoff anschliessend auf der Papiermaschine das Blatt bildet, weil selbst die geringen Mengen an Dispergiermitteln die Entwässerung des Papierstoffs und die Wirksamkeit von Retentionsmitteln bei der Papierherstellung sehr stark stören.

Der vorliegenden Erfindung liegt die Aufgabe zugrunde, wässrige Pigmentanschlämmungen bzw. ein Dispergiermittel für Pigmente, die bei der Papierherstellung der Stoffsuspension zugesetzt werden, zur Verfügung zu stellen. Dabei soll die Entwässerungsgeschwindigkeit des Papierstoffs sowie die Wirksamkeit von Retentionsmitteln praktisch nicht gestört werden.

Die Aufgabe wird erfindungsgemäss gelöst, durch Verwendung von wässrigen Pigmentanschlämmungen, die 40 bis 80 Gew.-% eines Pigments mit einem Teilchendurchmesser von kleiner als 2 µm für 40 bis 90% der Teilchen und 0,1 bis 2 Gew.-%, bezogen auf das Pigment, eines Copolymerisates enthalten, das

a) 40 bis 95 Gew.-% eines Esters aus Acrylsäure oder Methacrylsäure und einem einwertigen, gesättigten $C_1$- bis $C_8$-Alkohol oder einem zweiwertigen, gesättigten $C_2$- bis $C_4$-Alkohol und

b) 60 bis 5 Gew.-% einer ethylenisch ungesättigten $C_3$- bis $C_5$-Carbonsäure

einpolymerisiert enthält und das einen K-Wert von 10 bis 65 (bestimmt nach H. Fikentscher, in 1%iger wässriger Lösung als Ammoniumsalz bei pH 9 und 20°C) hat, und das gegebenenfalls mit Alkalilaugen, Ammoniak oder Aminen partiell oder vollständig neutralisiert ist bei der Herstellung von Papier, wenn man die wässrigen Pigmentanschlämmungen der Stoffsuspension vor der Blattbildung zusetzt.

Copolymerisate der oben angegebenen Zusammensetzung sind bekannt. Sie enthalten als Komponente a) 40 bis 95, vorzugsweise 65 bis 90 Gew.-% eines Esters aus Acrylsäure oder Methacrylsäure und einem einwertigen, gesättigten $C_1$- bis $C_8$-Alkohol oder einem zweiwertigen, gesättigten $C_2$- bis $C_4$-Alkohol. Geeignete Ester sind beispielsweise Methylacrylat, Ethylacrylat, n-Propylacrylat, Isopropylacrylat, n-Butylacrylat, iso-Butylacrylat, tert.-Butylacrylat, n-Pentylacrylat, Neopentylacrylat, n-Hexylacrylat, Cyclohexylacrylat, 2-Ethylhexylacrylat, Methylmethacrylat, Ethylmethylacrylat, Propylmethacrylat, n-, iso- und tert.-Butylmethacrylat, Neopentylmethacrylat, 2-Ethylhexylmethacrylat, 2-Hydroxylethylacrylat und -methacrylat, 2-Hydroxypropylacrylat, 3-Hydroxypropylacrylat, 4-Hydroxybutylacrylat, 4-Hydroxybutylmethacrylat, 2- bzw. 3-Hydropxypropylmethacrylate und 2-Hydroxyethylmethacrylat. Es ist selbstverständlich auch möglich, Mischungen aus verschiedenen Acrylsäureestern als Komponente a) einzusetzen sowie auch Mischungen aus verschiedenen Methacrylsäureestern und Gemische aus Acrylsäureestern und Methacrylsäureestern. Ebenso gut können auch Ester der Acrylsäure und Methacrylsäure eingesetzt werden, die sich von isomeren Alkoholen ableiten, z.B. Mischungen aus n-Propylacrylat und iso-Propylacrylat. Als Komponente a) enthalten die Copolymerisate vorzugsweise n-Butylacrylat oder iso-Butylacrylat bzw. Gemische der beiden isomeren Butylacrylate einpolymerisiert.

Als Komponente b) enthalten die Copolymerisate 60 bis 5, vorzugsweise 35 bis 10 Gew.-% einer ethylenisch ungesättigten $C_3$- bis $C_5$-Carbonsäure einpolymerisiert. Als ethylenisch ungesättigte Säuren eignen sich beispielsweise Acrylsäure, Methacrylsäure, Maleinsäure, Fumarsäure, Crotonsäure, Itaconsäure und Maleinsäureanhydrid, das nach dem Einpolymerisieren leicht in die Säure- bzw. Salzform umgewandelt werden kann. Vorzugsweise verwendet man aus dieser Gruppe von Monomeren Acrylsäure zur Herstellung der Copolymerisate.

Die Copolymerisate werden hergestellt, indem man die Monomeren a) und b) z.B. in wässriger Lösung in Gegenwart von Polymerisationsinitiatoren und Polymerisationsreglern der Copolymerisation unterwirft. Als Polymerisationsregler eignen sich vorzugsweise Thioverbindungen, die, bezogen auf die Monomeren, in einer Menge von 0,5 bis 12 Gew.-% eingesetzt werden.

Geeignete Thioverbindungen sind beispielsweise Thioglykolsäure, Dodecylmercaptan und 2-Mercaptoethanol. Ausserdem können als Polymerisationsregler Hydroxylamin sowie die Salze davon, z.B. Hydroxylammoniumchlorid, und Alkohole verwendet werden. Vorzugsweise werden die Monomeren a) und b) in einem Alkohol in Form einer Lösungspolymerisation bei Temperaturen von 50 bis 200°C in Gegenwart von Polymerisationsinitiatoren der Copolymerisation unterworfen. Für die Lösungspolymerisation geeignete Alkohole sind beispielsweise Methanol, Ethanol, n-Propanol und Isopropanol. Vorzugsweise führt man die Copolymerisation von Acrylsäure und n- bzw. iso-Butylacrylat in Isopropanol als Lösemittel durch. Im Anschluss an die Polymerisation wird vorzugsweise eine partielle oder vollständige Neutralisation der Carboxylgruppen des Copolymerisates durchgeführt. Sofern die Polymerisation in einem organischen Lösemittel erfolgt, wird dieses Lösungsmittel vor der Neutralisation aus der Reaktionsmischung entfernt und bei einer erneuten Polymerisation wieder eingesetzt. Der Rückstand der Destillation wird dann mit Alkalilaugen, z.B. Natronlauge oder Kalilauge, Ammoniak oder Aminen, z.B. Ethylamin, Ethanolamin, Trimethylamin oder Morpholin neutralisiert. Der Neutralisationsgrad der Copolymerisate beträgt vorzugsweise 60 bis 100%. Sofern die Polymerisation in wässrigem Medium durchgeführt wird, neutralisiert man das dabei erhaltene Copolymerisat direkt in der bei der Copolymerisation angefallenen Form mit einer der oben genannten Basen oder auch einer Mischung von Basen.

Man erhält auf diese Weise Copolymerisate, die einen K-Wert von 10 bis 65 (bestimmt nach H. Fikentscher, in 1%iger wässriger Lösung als Ammoniumsalz bei pH 9 und 20°C) haben. Vorzugsweise beträgt der K-Wert der Copolymerisate 15 bis 35.

Die so hergestellten Copolymerisate werden als Dispersionsmittel für Pigmente, die bei der Papierherstellung der Stoffsuspension zugesetzt werden, verwendet. Bisher hat man bei der Herstellung füllstoffhaltiger Papiere die Pigmente direkt in die Stoffsuspension eingetragen. Es ist jedoch vorteilhafter, die Pigmente zuvor mit einem Dispergiermittel zu dispergieren und dann in die Stoffsuspension einzuarbeiten, weil man dadurch eine feinere Verteilung der Pigmente im Papier und somit auch Papiere mit besseren optischen Eigenschaften erhält. Bei der Verwendung der Copolymerisate als Dispergiermittel für Pigmente stellt man zunächst wässrige Pigmentanschlämmungen her, die 40 bis 80 Gew.-% eines Pigments mit einem Teilchendurchmesser von $< 2\ \mu m$ für 40 bis 90% der Teilchen und 0,1 bis 2 Gew.-%, bezogen auf das Pigment, eines Copolymerisates enthalten, das

a) 40 bis 95 Gew.-% eines Esters aus Acrylsäure oder Methacrylsäure und einem einwertigen, gesättigten $C_1$- bis $C_8$-Alkohol oder einem zweiwertigen, gesättigten $C_2$- bis $C_4$-Alkohol und

b) 60 bis 5 Gew.-% einer ethylenisch ungesättigten $C_3$- bis $C_5$-Carbonsäure

einpolymerisiert enthält und das einen K-Wert von 10 bis 65 (bestimmt nach H. Fikentscher, in 1%iger wässriger Lösung als Ammoniumsalz bei pH 9 und 20°C) hat und das gegebenenfalls mit Alkalilaugen, Ammoniak oder Aminen partiell oder vollständig neutralisiert ist. Die Pigmentanschlämmungen enthalten vorzugsweise 0,2 bis 0,7 Gew.-% eines Copolymerisates aus den Komponenten a) und b), bezogen auf Pigment. Sie werden beispielsweise dadurch hergestellt, dass man zunächst das Copolymerisat, vorzugsweise ein mit Ammoniak vollständig neutralisiertes Copolymerisat in Wasser löst und das Pigment unter Rühren zufügt. Die Pigmentanschlämmungen sind in den angegebenen Konzentrationsbereichen pumpbar und können daher dem Papierstoff in einfacher Weise zugefügt werden.

Die Copolymerisate aus den Komponenten a) und b) unterscheiden sich nun vor allem dadurch von anderen als Dispergiermittel eingesetzten Polymerisaten, dass weder die Entwässerung noch die Wirkung von Retentionsmitteln gestört wird, die bei der Papierherstellung üblicherweise verwendet werden. Ausserdem beobachter man keine nachteilige Beeinflussung der Papierleimung, wie dies bei Gegenwart von üblichen Dispergiermitteln der Fall ist. Diese Tatsache bedeutet einen grossen Vorteil für die Papierherstellung, weil die Produktionsgeschwindigkeit nicht beeinträchtigt bzw. der Bedarf an Retentionsmitteln nicht erhöht wird.

Falls die Copolymerisate aus den Komponenten a) und b) zur Dispergierung von Pigmenten für die Streicherei verwendet werden, so sind diese Copolymerisate zwar nicht so wirksam, wie die hierfür gebräuchlichen Polyacrylsäuren, die z.B. der EP-PS 2771 bekannt sind, jedoch hat man hier den grossen Vorteil, dass man auch Ausschuss an gestrichenem Papier, der in der Papierstreicherei immer anfällt, ohne Beeinträchtigung der Entwässerungsgeschwindigkeit und der Wirkung der Retentionsmittel bei der Papierherstellung wieder einsetzen kann.

Die Copolymerisate aus den Komponenten a) und b) werden zum Dispergieren von Clay, Kalziumcarbonat (Kalk, Kreide oder gefällte Kreide), Talkum, Bentonit und Titandioxid verwendet. Bei den Pigmenten kann es sich sowohl um Füllstoffpigmente als auch um Streichpigmente handeln. Der Teilchendurchmesser der Pigmente ist $< 2\ \mu m$ für 40 bis 90% der Teilchen. Die Herstellung der Pigmentanschlämmungen erfolgt bei Raumtemperatur in den üblichen Vorrichtungen, z.B. in einem Deliteur, einem Dissolver oder einer Caddy-mill. Durch die Einwirkung hoher Scherkräfte während des Dispergierens kann die Temperatur der Pigmentanschlämmungen bei der Herstellung etwas ansteigen. Die wässrigen Pigmentanschlämmungen werden dann dem Papierstoff vor der Blattbildung in einer Menge zugesetzt, dass man 2 bis 50, vorzugsweise 5 bis 30 Gew.-% Pigmente enthaltende Papiere herstellt.

Die Prüfung der Papierblätter für die unten gezeigten Beispiele erfolgte nach Klimatisierung der Blätter von 24 Stunden bei einer Temperatur von 23°C und einer relativen Luftfeuchtigkeit von 50%.

Die Entwässerungsbeschleunigung wurde durch die Mahlgradsenkung in Schopper-Riegler (°SR) gemäss Merkblatt 107 des Vereins der Zellstoff- und Papierchemiker und Ingenieure bestimmt. Die Entwässerungszeit wurde mit Hilfe eines Rapid-Köthen-Geräts gemessen.

Die in den Beispielen angegebenen Teile sind Gewichtsteile. Die Angaben in Prozent beziehen sich auf das Gewicht der Stoffe. Die Viskositäten wurden in einem Rotationsviskosimeter, Typ Brookfield und einer Umdrehungsgeschwindigkeit von 100 min⁻¹ bei einer Temperatur von 20°C gemessen.

*Beispiel 1*

Zunächst wurden aus einer feinteiligen Kreide mit einem Teilchendurchmesser von < 2 µm für 70% der Teilchen jeweils die folgenden 52%igen wässrigen Kreideanschlämmungen hergestellt:

a) Vergleich

Die feinteilige Kreide wurde ohne Verwendung eines Dispergiermittels in Wasser eingerührt. Man erhielt eine wässrig Anschlämmung, die einen pH-Wert von 9,0 und eine Viskosität von 2350 mPas hatte.

b) Vergleich

Man löste zunächst ein handelsübliches Dispergiermittel (Natriumsalz eines Homopolymerisates der Acrylsäure mit einem K-Wert von 24 bei pH von 9,0) in Wasser und gab dann die oben angegebene feinteilige Kreide hinzu, so dass man eine 52%ige wässrige Kreideanschlämmung erhielt, die, bezogen auf Kreide, 0,2% des Dispergiermittels enthielt. Diese Kreideanschlämmung hatte eine Viskosität von 85 mPas bei einem pH-Wert von 9,0.

c) Beispiel gemäss Erfindung

Man löste das Ammoniumsalz eines Lösungscopolymerisates aus 80% einer Mischung aus n- und iso-Butylacrylat im Gewichtsverhältnis 1:1 und 20 Gew.-% Acrylsäure (K-Wert 24 bei pH von 9,0) in Wasser und gab dann feinteilige Kreide hinzu, so dass man eine 52%ige wässrige Kreideanschlämmung erhielt, die, bezogen auf Pigment, 0,2% des Copolymerisats enthielt. Sie hatte einen pH-Wert von 9,0 und eine Viskosität von 250 mPas.

Danach stellte man jeweils aus reinem Fichtensulfitzellstoff drei 0,5%ige Stoffsuspensionen in Wasser her, zu denen man dann jeweils eine der oben beschriebenen Kreideanschlämmungen a) bis c) zugab, so dass jeweils ein Pigmentgehalt, bezogen auf trockenen Faserstoff, von 40% resultierte. Die so erhaltenen Stoffsuspensionen a) bis c) hatten jeweils einen pH-Wert von 7,5 und einen Mahlgrad nach Schopper-Riegler von 54 bis 55.

Jede Stoffsuspension wurde dann in drei Teile geteilt und auf das Verhalten bei der Blattbildung in einem Rapid-Köthen-Laborblattbildner untersucht. Der erste Teil der Stoffsuspension wurde direkt für die Blattbildung verwendet, während man dem zweiten und dem dritten Teil 0,2 bzw. 0,4% eines handelsüblichen kationischen Retentionsmittels zusetzte (Kondensationsprodukt aus Adipinsäure und Diethylentriamin, gepfropft mit Ethylenimin und anschliessend vernetzt mit einem Polyalkylenoxid, das an den endständigen OH-Gruppen mit äquivalenten Mengen Epichlorhydrin umgesetzt worden ist, gemäss Beispiel 1 der DE-PS 2 434 815). Die dabei erhaltenen Ergebnisse sind in Tabelle 1 zusammengefasst.

TABELLE 1

| Stoffsuspension | Entwässerungszeit [s] | | | Mahlgrad [SR] | | | Flächengewicht [g/m²] | | |
|:---:|:---:|:---:|:---:|:---:|:---:|:---:|:---:|:---:|:---:|
| | nach Zugabe von ... % eines handelsüblichen Retentionsmittels | | | | | | | | |
| | 0 | 0,2% | 0,4% | 0 | 0,2% | 0,4% | 0 | 0,2% | 0,4% |
| (a) | 80 | 51,5 | 43,6 | 55 | 43 | 39 | 58,3 | 65,8 | 66,9 |
| (b) | 79,6 | 72,2 | 67,6 | 55 | 52 | 50 | 57,5 | 60,4 | 63,2 |
| (c) | 75,2 | 51,2 | 43,7 | 54 | 44 | 40 | 60,3 | 66,2 | 69,2 |

Wie aus der Tabelle 1 ersichtlich ist, wird die Entwässerung bzw. der Retentionsvorgang bei der Stoffsuspension b) durch die Anwesenheit der handelsüblichen Polyacrylsäure als Dispergiermittel im Vergleich zur dispergiermittelfreien Suspension a) sehr stark gestört: So ist die Entwässerungszeit erhöht, der Mahlgrad weniger stark abgesenkt und das Flächengewicht ebenfalls erniedrigt. Dagegen ist bei Einsatz der Stoffsuspension c) eine derartige Störung nicht zu beobachten.

*Beispiel 2*

Man stellte zunächst eine 0,5%ige wässrige Stoffsuspension aus 80% Holzschliff und 20% gebleichtem Sulfatzellstoff her. Die 0,5%ige wässrige Stoffsuspension wurde dann in drei Teile geteilt, die jeweils mit den in Beispiel 1 beschriebenen wässrigen Kreideanschlämmungen a) bis c) versetzt wurden, so dass, bezogen auf trockenen Faserstoff ein Pigmentgehalt von 40% resultierte. Die pH-Werte der so erhaltenen Stoffsuspensionen 2a) bis 2c) betrugen 7,0. Diese Stoffsuspensionen wurden dann in 3 Teile geteilt, von denen der erste Teil direkt und die beiden anderen Teile nach Zusatz von 0,08 bzw. 0,16% eines handelsüblichen kationischen Retentionsmittels geprüft wurden. Als handelsübliches kationisches Retentionsmittel wurde eine Wasser-in-Öl-Emulsion eines Copolymerisats aus 70% Acrylamid und 30% Diethylaminoethylacrylat verwendet.

Die Ergebnisse sind in Tabelle 2 angegeben. Auch hier ist wieder deutlich sichtbar, dass das erfindungsgemäss zu verwendende Copolymerisat die Entwässerung des Papierstoffs und die Retention nicht stört, während das handelsübliche Dispergiermittel sehr stark störend wirkt.

TABELLE 2

| Stoffsuspension | Entwässerungszeit [s] | | | Flächengewicht [g/m$^2$] | | |
| | nach Zusatz von...% eines handelsüblichen Retentionsmittels | | | | | |
| | 0 | 0,08 | 0,16 | 0 | 0,08 | 0,16 |
| (a) Vergleich | 99 | 45,5 | 34,3 | 61,7 | 73,1 | 77,16 |
| (b) Vergleich | 98,4 | 56,3 | 42,3 | 60,8 | 71,3 | 73,9 |
| (c) erfindungsgemäss | 93,5 | 46,3 | 34,5 | 61,4 | 73,9 | 77,3 |

*Beispiel 3*

Durch Dispergieren von Clay in Wasser wurden jeweils drei 52%ige Anschlämmungen hergestellt, die einen pH-Wert von 7 hatten. Der Clay hatte eine Teilchengrösse von < 2 µm für 45% der Teilchen.

a) Vergleich

Es wurde eine 52%ige Clayanschlämmung in Wasser hergestellt, die eine Viskosität von 4150 mPas hatte.

b) Vergleich

Es wurde eine 52%ige wässrige Clayanschlämmung unter Verwendung von 0,2% der im Beispiel 1b) angegebenen Polyacrylsäure hergestellt. Man erhielt eine Clayanschlämmung mit einer Viskosität von 40 mPas.

c) Beispiel gemäss Erfindung

Unter Verwendung von 0,2%, bezogen auf Pigment, eines Lösungscopolymerisats (hergestellt in Isopropanol) aus 80% Isobutylacrylat und 20% Acrylsäure (K-Wert 23) als Dispergiermittel wurde eine Clayanschlämmung hergestellt, die eine Viskosität von 1400 mPas hatte.

Man stellte dann eine 0,5%ige Stoffsuspension aus einem reinen Fichtensulfitzellstoff her, die 1% Alaun enthielt und einen pH-Wert von 5 hatte. Diese Suspension wurde in drei Teile geteilt, zu der man jeweils die oben unter a) bis c) beschriebenen Pigmentanschlämmungen zusetzte, so dass man Stoffsuspensionen erhielt, deren Pigmentgehalt, bezogen auf trockenen Faserstoff, 40% betrug. Die so erhaltenen drei unterschiedlichen Stoffsuspensionen a) bis c) wurden in drei Teile geteilt, von denen der erste Teil ohne jeden weiteren Zusatz, der zweite Teil nach Zusatz von 0,2% und der dritte Teil nach Zusatz von 0,4% eines Retentionsmittels in einem Rapid-Köthen-Laborblattbildner untersucht wurden. Als Retentionsmittel wurde das im Beispiel 1 beschriebene handelsübliche Produkt verwendet. Die Ergebnisse sind in Tabelle 3 angegeben und zeigen, dass das erfindungsgemäss zu verwendende Copolymerisat [Stoffsuspension c)] die Entwässerung und Retention nicht stört, während das handelsübliche Dispergiermittel [Stoffsuspension b)] die Retention verschlechtert.

TABELLE 3

| Stoffsuspension | Entwässerungszeit [s] | | | Flächengewicht [g/m$^2$] | | |
| | nach Zusatz von ... % eines handelsüblichen Retentionsmittels | | | | | |
| | 0 | 0,2 | 0,4 | 0 | 0,2 | 0,4 |
| (a) | 86,4 | 61,4 | 53,7 | 64,8 | 67,0 | 69,1 |
| (b) | 88,3 | 65,6 | 59,4 | 65,5 | 65,3 | 68,4 |
| (c) | 83,3 | 60,2 | 50,4 | 63,1 | 67,0 | 70,3 |

**Patentansprüche**

1. Verwendung von wässrigen Pigmentanschlämmungen, die 40 bis 80 Gew.-% eines Pigments mit einem Teilchendurchmesser von kleiner als 2 µm für 40 bis 90% der Teilchen und 0,1 bis 2 Gew.-%, bezogen auf das Pigment, eines Copolymerisates enthalten, das

a) 40 bis 95 Gew.-% eines Esters aus Acrylsäure oder Methacrylsäure und einem einwertigen, gesättigten C$_1$- bis C$_8$-Alkohol oder einem zweiwertigen, gesättigten C$_2$- bis C$_4$-Alkohol und

b) 60 bis 5 Gew.-% einer ethylenisch ungesättigten C$_3$- bis C$_5$-Carbonsäure einpolymerisiert enthält und das einen K-Wert von 10 bis 65 (bestimmt nach H. Fikentscher, in 1%iger wässriger Lösung als Ammoniumsalz bei pH 9 und 20°C) hat, und das gegebenenfalls mit Alkalilaugen, Ammoniak oder Aminen partiell oder vollständig neutralisiert ist bei der Herstellung von Papier, dadurch gekennzeichnet, dass man die wässrigen Pigmentanschlämmungen der Stoffsuspension vor der Blattbildung zusetzt.

2. Verwendung der wässrigen Pigmentanschlämmungen nach Anspruch 1, dadurch gekennzeichnet, dass man 2 bis 50 Gew.-% Pigmente enthaltende Papiere herstellt.

3. Verwendung nach den Ansprüchen 1 und 2, dadurch gekennzeichnet, dass man Copolymerisate, die

a) 65 bis 90 Gew.-% eines Esters aus Acrylsäure oder Methacrylsäure und einem einwertigen, gesättigten $C_1$- bis $C_8$-Alkohol oder einem zweiwertigen, gesättigten $C_2$- bis $C_4$-Alkohol und

b) 35 bis 10 Gew.-% einer ethylenisch ungesättigten $C_3$- bis $C_5$-Carbonsäure einpolymerisiert enthalten und die einen K-Wert von 15 bis 35 haben, einsetzt.

4. Verwendung nach den Ansprüchen 1 und 2, dadurch gekennzeichnet, dass man Copolymerisate, die

a) 65 bis 90 Gew.-% eines Esters aus Acrylsäure und einem einwertigen, gesättigten $C_4$-Alkohol und

b) 35 bis 10 Gew.-% Acrylsäure, Methacrylsäure, Maleinsäure oder Fumarsäure einpolymerisiert enthalten und die einen K-Wert von 15 bis 35 haben, einsetzt.

5. Verwendung nach den Ansprüchen 1 und 2, dadurch gekennzeichnet, dass man die Ammoniumsalze von Copolymerisaten, die

a) 65 bis 90 Gew.-% eines Butylacrylats und

b) 35 bis 10 Gew.-% Acrylsäure oder Methacrylsäure einpolymerisiert enthalten, und die einen K-Wert von 15 bis 35 haben, einsetzt.

6. Verwendung nach den Ansprüchen 1 und 2, dadurch gekennzeichnet, dass man Ammoniumsalze von Copolymerisaten einsetzt, die durch Lösungspolymerisation der Monomeren (a) und (b) bei Temperaturen von 50 bis 200°C in Gegenwart von Polymerisationsinitiatoren und Polymerisationsreglern, Verdampfen des Lösemittels und Neutralisieren mit Ammoniak erhältlich sind.

## Claims

1. Use of an aqueous pigment suspension which contains from 40 to 80% by weight of a pigment in which from 40 to 90% of the particles have a diameter of less than 2 μm and from 0.1 to 2% by weight, based on the pigment, of a copolymer which contains, as copolymerized units

a) from 40 to 95% by weight of an ester of acrylic acid or methacrylic acid with a saturated monohydric $C_1$-$C_8$-alcohol or with a saturated dihydric $C_2$-$C_4$-alcohol and

b) from 60 to 5% by weight of an ethylenically unsaturated $C_3$-$C_5$-carboxylic acid

and has a K value of from 10 to 65 (determined according to H. Fikentscher in 1% strength aqueous solution in the form of the ammonium salt at pH 9 and at 20°C) and may be partially or completely neutralized with an alkali metal hydroxide solution, ammonia or an amine in papermaking, wherein the aqueous pigment suspension is added to the pulp prior to sheet formation.

2. Use of an aqueous pigment suspension as claimed in claim 1, wherein a paper containing from 2 to 50% by weight of a pigment is made.

3. Use as claimed in claim 1 and 2, wherein the copolymer used contains, as copolymerized units,

a) from 65 to 90% by weight of an ester of acrylic acid or methacrylic acid with a saturated monohydric $C_1$-$C_8$-alcohol or with a saturated dihydric $C_2$-$C_4$-alcohol and

b) from 35 to 10% by weight of an ethylenically unsaturated $C_3$-$C_5$-carboxylic acid and has a K value of from 15 to 35.

4. Use as claimed in claims 1 and 2, wherein the copolymer used contains, as copolymerized units,

a) from 65 to 90% by weight of an ester of acrylic acid with a saturated monohydric $C_4$-alcohol and

b) from 35 to 10% by weight of acrylic acid, methacrylic acid, maleic acid or fumaric acid and has a K value of from 15 to 35.

5. Use as claimed in claims 1 and 2, wherein an ammonium salt of a copolymer which contains, as copolymerized units

a) from 65 to 90% by weight of a butyl acrylate and

b) from 35 to 10% by weight of acrylic acid or methacrylic acid and has a K value of from 15 to 35 is used.

6. Use as claimed in claims 1 and 2, wherein an ammonium salt of a copolymer which is obtainable by solution polymerization of the monomers (a) and (b) at from 50 to 200°C in the presence of polymerization initiators and polymerization regulators, evaporation of the solvent and neutralization with ammonia is used.

## Revendications

1. Utilisation de suspensions de pigment, qui contiennent 40 à 80% en poids d'un pigment d'un diamètre des particules inférieur à 2 μm pour 40 à 90% des particules et 0,1 à 2% en poids, par rapport au pigment, d'un copolymère, qui contient, incorporés par polymérisation,

a) 40 à 95% en poids d'un ester de l'acide acrylique ou de l'acide méthacrylique et d'un alcool en $C_1$ à $C_8$, saturé, monofonctionnel, ou d'un alcool en $C_2$ à $C_4$, saturé, bifonctionnel, et

b) 60 à 5% en poids d'un acide carboxylique en $C_3$ à $C_5$, à insaturation éthylénique,

et qui possède une valeur K de 10 à 65 (comme déterminée selon H. Fikentscher, en solution aqueuse à 1%, sous forme de sel d'ammonium, à un pH de 9 et à 20°C) et qui est éventuellement partiellement ou totalement neutralisé à l'aide de lessives alcalines, d'ammoniac ou d'amines, au cours de la fabrication du papier, caractérisée en ce que l'on ajoute les suspensions aqueuses de pigment à la suspension de pâte avant la formation de la feuille.

2. Utilisation des suspensions de pigment suivant la revendication 1, caractérisée en ce que l'on fabrique des papiers contenant de 2 à 50% en poids de pigments.

3. Utilisation suivant les revendications 1 et 2, caractérisée en ce que l'on met en œuvre des copolymères qui contiennent, incorporés par polymérisation, de

a) 65 à 90% en poids d'un ester de l'acide acrylique ou de l'acide méthacrylique et d'un alcool en $C_1$ à $C_8$, saturé, monofonctionnel, ou d'un alcool en $C_2$ à $C_4$, saturé, bifonctionnel, et

b) 35 à 10% en poids d'un acide carboxylique en $C_3$ à $C_5$, à insaturation éthylénique, et qui possèdent une valeur K de 15 à 35.

4. Utilisation suivant les revendications 1 et 2, caractérisée en ce que l'on met en œuvre des copolymères qui contiennent, incorporés par polymérisation, de

a) 65 à 90% en poids d'un ester de l'acide acrylique et d'un alcool en $C_4$, saturé, monofonctionnel, et

b) 35 à 10% en poids d'acide acrylique, d'acide méthacrylique, d'acide maléique ou d'acide fumarique et qui possèdent une valeur K de 15 à 35.

5. Utilisation suivant les revendications 1 et 2, caractérisée en ce que l'on met en œuvre des copolymères qui contiennent, incorporés par polymérisation, de

a) 65 à 90% en poids d'un acrylate de butyle et

b) 35 à 10% en poids d'acide acrylique ou d'acide méthacrylique, et qui possèdent une valeur K de 15 à 35%.

6. Utilisation suivant les revendications 1 et 2, caractérisée en ce que l'on met en œuvre des sels d'ammonium de copolymères que l'on peut obtenir par polymérisation en solution des monomères (a) et (b), à des températures de 50 à 200°C, en présence d'amorceurs de polymérisation et de régulateurs de polymérisation, par évaporation du solvant et par neutralisation à l'ammoniac.